(19) Europäisches Patentamt
European Patent Office
Office européen des brevets

(11) Veröffentlichungsnummer: **0 090 777**
**A1**

(12) # EUROPÄISCHE PATENTANMELDUNG

(21) Anmeldenummer: **83810125.1**

(22) Anmeldetag: **25.03.83**

(51) Int. Cl.³: **C 09 B 33/147**, C 09 B 43/38, C 08 K 5/23

(30) Priorität: **31.03.82 CH 1982/82**

(43) Veröffentlichungstag der Anmeldung: **05.10.83**
**Patentblatt 83/40**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Ronco, Karl, Dr., In der Au 11, CH-4125 Riehen (CH)**

(54) **Disazopigmente, Verfahren zu deren Herstellung und Verwendung.**

(57) Disazopigmente der Formel

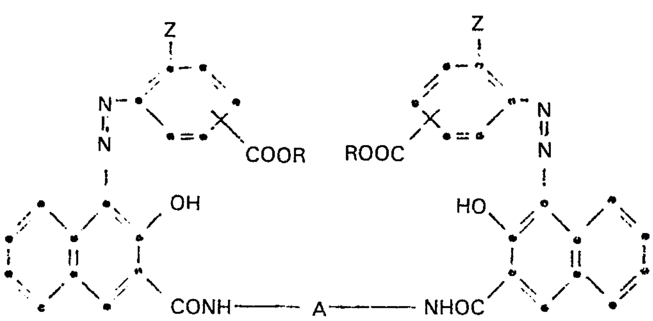

(I)

worin R einen fluorhaltigen $C_2$-$C_6$-Alkylrest, insbesondere einen Trifluoralkylrest, Z Wasserstoff, Chlor, $C_1$-$C_2$-Alkyl oder $C_1$-$C_2$-Alkoxy, A einen gegebenenfalls substituierten Phenylrest oder einen Naphthylenrest bedeuten, eignen sich zum Pigmentieren von Kunststoffen und Lacken in farbstarken roten Tönen von guter Licht- und Wetterechtheit.

EP 0 090 777 A1

CIBA-GEIGY AG
Basel (Schweiz)

3-13873/+

Disazopigmente, Verfahren zu deren Herstellung und Verwendung

Die Erfindung betrifft Disazopigmente der Formel

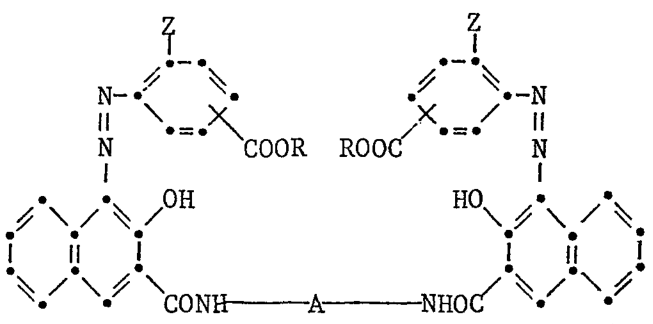

(I)

worin R einen fluorhaltigen $C_2$-$C_6$-Alkylrest, Z Wasserstoff, Chlor, $C_1$-$C_2$-Alkyl oder $C_1$-$C_2$-Alkoxy, A einen gegebenenfalls substituierten Phenylenrest oder einen Naphthylenrest bedeuten.

Der Rest R enthält vorzugsweise 3 bis 6 Fluoratome. Als Beispiele seien die folgenden Reste genannt: $-CH_2CF_2CHF_2$, $-CH_2CF_2CHFCF_3$, $-CH_2(C_2F_4)_nH$, worin n = 1-3 und insbesondere $-CH_2CF_3$.

Z steht vorzugsweise für eine Methylgruppe.

Die Gruppe -COOR steht bevorzugt in p-Stellung zu Z.

Bedeutet A einen Phenylenrest, dann kann er als allfällige Substituenten Halogenatome, insbesondere Chloratome, Alkyl- oder Alkoxygruppen, insbesondere solche mit 1-4 C enthalten. Steht A für einen Naphthylenrest, dann vorzugsweise für den 1,4- oder 1,5-Naphthylenrest.

A bedeutet vorzugsweise einen Rest der Formel

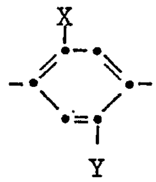

worin X und Y Wasserstoff, Chlor, Methyl oder $C_1$-$C_4$-Alkoxy bedeuten.

Stehen X und Y für Alkoxygruppen, dann beispielsweise für Aethoxy-, Propoxy- oder Isopropoxygruppen, insbesondere aber Methoxygruppen. Von besonderem Interessen sind jene Pigmente, worin X Chlor und Y Methyl bedeuten.

Man erhält die Pigmente der Formel (I) vorzugsweise durch Kondensation eines Säurechlorides der Formel

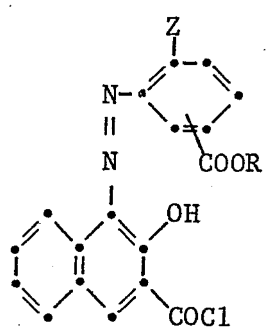

(II)

mit einem Diamin der Formel

$$H_2N\text{-}A\text{-}NH_2 \qquad \text{(III)}$$

im Molverhältnis 2:1.

Die Säurechloride der Formel (II) erhält man durch Kuppeln der Diazoverbindung des Amins der Formel

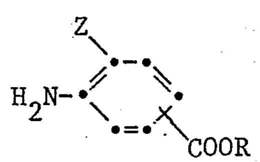

(IV)

mit 2,3-Hydroxynaphthoesäure und Behandeln der erhaltenen Azofarbstoffcarbonsäure mit säurechlorierenden Mitteln, wie Phosphortrichlorid, Phosphoroxychlorid oder insbesondere Thionylchlorid.

Die Amine der Formel (IV) erhält man zweckmässig durch Kondensation einer Nitrocarbonsäure der Formel

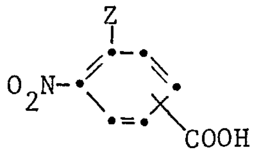

(V)

mit einem Alkohol der Formel ROH und Reduktion des erhaltenen Esters zum Amin. Die Reduktion erfolgt zweckmässig katalytisch.

Als Beispiele von Nitrocarbonsäuren der Formel (V) seien genannt:

1-Nitro-2-chlorbenzol-5-carbonsäure
1-Nitro-2-methylbenzol-5-carbonsäure
1-Nitro-2-methoxybenzol-5-carbonsäure
1-Nitro-2-äthoxybenzol-5-carbonsäure
1-Nitrobenzol-3-carbonsäure
1-Nitrobenzol-2-carbonsäure
1-Nitrobenzol-4-carbonsäure.

Diazotierung und Kupplung erfolgen auf übliche Weise in wässrigem Medium. Die Behandlung mit den säurechlorierenden Mitteln wird zweckmässig in indifferenten organischen Lösungsmitteln, wie Dimethylformamid, Chlorbenzolen, z.B. Mono- oder Dichlorbenzol, Toluol, Xylol, Nitrobenzol oder höher alkylierte aromatische Kohlenwasserstoffe durchgeführt, bei den letztgenannten gegebenenfalls unter Zusatz von Dimethylformamid. Bei der Herstellung des Carbonsäurechlorides ist es zweckmässig, die in wässrigem Medium hergestellte Azoverbindung vorerst zu trocknen oder durch Kochen in einem organischen Lösungsmittel azeotrop von Wasser zu befreien. Diese azeotrope Trocknung kann gewünschtenfalls unmittelbar vor der Behandlung mit den säurehalogenierenden Mitteln vorgenommen werden.

Als Beispiele von Diaminen der Formel (III) seien erwähnt:

1,4-Phenylendiamin
2-Chlor-1,4-phenylendiamin
2-Methyl-1,4-phenylendiamin

2-Methoxy-1,4-diphenylendiamin
2,5-Dichlor-1,4-phenylendiamin
2,5-Dimethyl-1,4-phenylendiamin
2,5-Dimethoxy-1,4-phenylendiamin
2,5-Diäthoxy-1,4-phenylendiamin
2,5-Dipropoxy-1,4-phenylendiamin
2-Chlor-5-methyl-1,4-phenylendiamin
2-Chlor-5-methoxy-1,4-phenylendiamin
2-Methyl-5-methoxy-1,4-phenylendiamin
1,5-Naphthylendiamin
1,4-Naphthylendiamin.

Die Kondensation zwischen dem Azofarbstoff-Carbonsäurechlorid und dem Diamin wird zweckmässig in wasserfreiem Medium durchgeführt. Sie erfolgt bei Temperaturen, die im Siedebereich normaler organischer Lösungsmittel wie Toluol, Monochlorbenzol, Dichlorbenzol, Trichlorbenzol, Nitrobenzol und ähnlichen liegen. Zur Beschleunigung der Umsetzung empfiehlt es sich, ein säurebindendes Mittel wie wasserfreies Natriumacetat, Pyridin oder N,N-Diäthylanilin zu verwenden. Die erhaltenen Pigmente werden in sehr guter Ausbeute und reinem Zustand erhalten. Es ist zweckmässig, die aus den Carbonsäuren erhaltenen Säurechloride vorerst abzuscheiden.

Dank ihrer Unlöslichkeit können die erhaltenen Pigmente aus den Reaktionsgemischen durch Abfiltrieren isoliert werden.

Die Pigmente der Formel (I) erhält man auch durch Kuppeln der Diazoverbindung des Amins der Formel (IV) mit dem entsprechenden 1,4-Bis-(2'-Hydroxy-3'-naphthoylamino)-benzol im Molverhältnis 2:1.

Die Kupplung wird vorzugsweise in der Weise vollzogen, dass man das zu diazotierende Amin mit der Kupplungskomponente im Molverhältnis 2:1 in einem organischen Lösungsmittel suspendiert und mit einem diazotierten Mittel, insbesondere einem Ester der salpetrigen Säure, wie Methyl-, Aethyl-, Butyl-, Amylnitrit behandelt.

Die erfindungsgemässen Pigmente können z.T. als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100°C sieden, kann, wenn erwünscht, oft eine Verbesserung der Eigenschaften erreicht werden. Als besonders geeignete erweisen sich, durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Aether, wie Aethylenglykolmonomethyl- oder monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200°C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemässen Pigmente eignen sich zum Pigmentieren von hochmolekularen Verbindungen, z.B. Celluloseäthern und -estern, wie Aethylcellulose, Acetylcellulose, Nitrocellulose, Polyamiden bzw. Polyurethanen oder Polyestern, natürlichen Harzen oder Kunstharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmente als Toner oder in Form von Präparaten zu verwenden. Schliesslich können die neuen Pigmente auch als photoelektrophoretische Toner verwendet werden.

Zum Pigmentieren von Lacken und Druckfarben werden die hochmolekularen organischen Materialien und die Verbindungen der Formel (1) gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% einer Verbindung der Formel (I), bezogen auf den zu pigmentierenden hochmolekularen organischen Stoff; dabei enthalten Polyplaste und Lacke vorzugsweise 0,1 bis 10 Gew.-%, Druckfarben vorzugsweise 10 - 30 Gew.-%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polymeren.

Die erhaltenen roten Färbungen, beispielsweise in Kunststoffen, Fasern und Lacken zeichnen sich durch sehr grosse Farbstärke und Brillanz, hohe Opazität, gute Dispergierbarkeit, gute Ueberlackier-, guten Glanz, gute rheologische Eigenschaften und gutes IR-Remissionsverhalten aus.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

Beispiel 1: 130 Teile des Azofarbstoffes aus diazotiertem 3-Amino-4-methylbenzoesäure-2',2',2'-trifluormethylester und 2,3-Hydroxynaphthoesäure werden in 480 Teilen o-Dichlorbenzol suspendiert. Man gibt zum Gemisch 0,6 Teile Pyridin und tropft innert 20 Minuten bei 60-70° 49 Teile Thionylchlorid hinzu. Man erwärmt auf 100° und rührt eine Stunde bei 100°-110°. Die Lösung wird abgekühlt und das kristallin ausgefallene Säurechlorid abgenutscht, mit o-Dichlorbenzol und anschliessend mit Petroläther gewaschen. Man trocknet im Vakuum bei 70° bis 75° und erhält 120 Teile des Azofarbstoffcarbonsäurechlorids der Formel

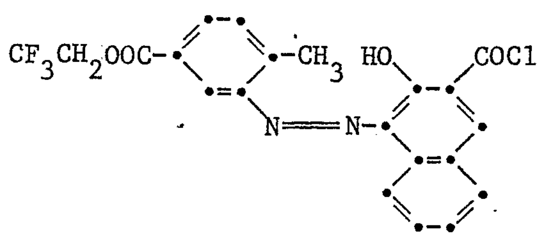

9,07 Teile des so hergestellten Säurechlorids werden mit 70 Teilen o-Dichlorbenzol verrührt. Nun gibt man eine 120° warme Lösung von 1,57 Teilen 2-Chlor-5-methyl-1,4-phenylendiamin in 30 Teilen o-Dichlorbenzol hinzu, erwärmt auf 140° und lässt während 10 Stunden bei 140-145°C nachrühren. Das Reaktionsgemisch wird heiss abfiltriert, mit heissem o-Dichlorbenzol, anschliessend mit Methanol und dann mit Wasser nachgewaschen. Nach dem Trocknen erhält man 9,45 Teile eines weichkörnigen roten Pigmentpulvers, das Kunststoffe, wie beispielsweise Polyvinylchlorid, Polyolefine, sowie Lacke in sehr brillanten gelbstichig-roten Tönen von ausgezeichneter Migrations-, Ueberlackier-, Hitze- und Lichtechtheit färbt.

In der nachstehenden Tabelle sind weitere Säureamidderivate von Azofarbstoffen beschrieben, welche erhalten werden, wenn man nach den obigen Angaben 2 Moleküle des Säurechlorides der Azoverbindung aus der in Kolonne I genannten Diazokomponente gekuppelt mit 2,3-Hydroxynaphthoeasäure mit 1 Mol des in Kolonne II genannten Diamins kondensiert. Kolonne III bezeichnet den Farbton einer mit dem entsprechenden Pigment gefärbten Polyvinylchloridfolie.

Tabelle

| Bsp. | I | II | III |
|---|---|---|---|
| 2 | 3-Amino-4-methyl-benzoesäure-2',2',2'-trifluoräthylester | 2,5-Dimethyl-1,4-diaminobenzol | brillantes gelbstichiges Rot |
| 3 | 3-Amino-4-methyl-benzoesäure-2',2',2'-trifluoräthylester | 2,5-Dimethoxy-1,4-diaminobenzol | Karmin |
| 4 | 3-Amino-4-methyl-benzoesäure-2',2',2'-trifluoräthylester | 2-Methoxy-1,4-diaminobenzol | Rot |
| 5 | 3-Amino-4-methyl-benzoesäure-2',2',2'-trifluoräthylester | 2,5-Dichlor-1,4-diaminobenzol | gelbstichiges Rot |
| 6 | 3-Amino-4-methyl-benzoesäure-2',2',2'-trifluoräthylester | 1,4-Diaminobenzol | gelbstichiges Rot |
| 7 | 3-Amino-4-methyl-benzoesäure-2',2',2'-trifluoräthylester | 2-Methoxy-5-chlor-1,4-diamino-benzol | brillantes gelbstichiges Rot |
| 8 | 3-Amino-4-methyl-benzoesäure-2',2',2'-trifluoräthylester | 2-Chlor-1,4-diaminobenzol | brillantes gelbstichiges Rot |
| 9 | 3-Amino-4-methyl-benzoesäure-2',2',2'-trifluoräthylester | 2-Methyl-1,4-diaminobenzol | brillantes gelbstichiges Rot |
| 10 | 3-Amino-4-methyl-benzoesäure-2',2',2'-trifluoräthylester | 1,5-Diaminonaphthalin | Rot |
| 11 | 3-Amino-4-chlor-benzoesäure-2',2',2'-trifluoräthylester | 2,5-Dimethyl-1,4-diaminobenzol | gelbstichig Rot |
| 12 | 3-Amino-4-chlor-benzoesäure-2',2',2'-trifluoräthylester | 2,5-Dimethoxy-1,4-diaminobenzol | braunstichig Rot |

Tabelle (Fortsetzung)

| Bsp. | I | II | III |
|---|---|---|---|
| 13 | 3-Amino-benzoesäure-2',2',2'-trifluoräthylester | 1,4-Diaminobenzol | Scharlach |
| 14 | 3-Amino-benzoesäure-2',2',2'-trifluoräthylester | 2,5-Dichlor-1,4-diaminobenzol | orange |
| 15 | 3-Amino-4-methoxybenzoesäure-2',2',2'-trifluoräthylester | 2,5-Dimethyl-1,4-diaminobenzol | karmin |
| 16 | 3-Amino-4-chlor-benzoesäure-2',2',2'-trifluoräthylester | 2,5-Dichlor-1,4-diaminobenzol | brillantes Scharlach |
| 17 | 3-Amino-4-chlor-benzoesäure-2',2',2'-trifluoräthylester | 1,4-Diaminobenzol | brillantes Scharlach |
| 18 | 3-Amino-4-chlor-benzoesäure-2',2',2'-trifluoräthylester | 1,5-Diaminonaphthalin | Rot |
| 19 | 3-Amino-4-chlor-benzoesäure-2',2',3',3'-tetrafluor-propylester | 1,4-Diaminobenzol | Rot |
| 20 | 3-Amino-4-chlor-benzoesäure-2',2',3',3',-tetrafluor-propylester | 2,5-Dichlor-1,4-diaminobenzol | brillantes Scharlach |
| 21 | 3-Amino-4-methyl-benzoesäure-2',2',3',3'-tetrafluor-propylester | 2-Chlor-5-methyl-1,4-diaminobenzol | Scharlach |
| 22 | 3-Amino-4-methyl-benzoesäure-2',2',3',3'-tetrafluor-propylester | 2,5-Dimethyl-1,4-diaminobenzol | Rot |
| 23 | 3-Amino-4-chlor-benzoesäure-2',2',3',4',4',4'-hexafluor-butylester | 1,4-Diaminobenzol | Braun |

Tabelle (Fortsetzung)

| Bsp. | I | II | III |
|---|---|---|---|
| 24 | 3-Amino-4-chlor-benzoesäure-2',2',3',4',4',4'-hexafluor-butylester | 2-Chlor-5-methyl-1,4-diaminobenzol | Rot |
| 25 | 4-Aminobenzoesäure-2,'2',2'-trifluoräthylester | 1,4-Diaminobenzol | Rot |
| 26 | 4-Aminobenzoesäure-2',2',2'-trifluoräthylester | 2,5-Dichlor-1,4-diaminobenzol | Rotorange |
| 27 | 4-Aminobenzoesäure-2',2',2'-trifluoräthylester | 2,5-Dimethyl-1,4-diaminobenzol | Bordeaux |
| 28 | 4-Aminobenzoesäure-2',2',2'-trifluoräthylester | 2,5-Dimethoxy-1,4-diaminobenzol | Braun |

Beispie 29: 68 g Polyvinylchlorid-Pulver (Suspensionspolymerisat), 33 g Dioctylphthalat, 2 g Dibutylzinnlaurat, 0,3 g eines Stabilisators auf Phosphatbasis und 0,7 g des nach Beispiel 1 hergestellten Pigmentes werden vermischt und auf dem 160° heissen Mischwalzwerk während 15 Minuten verarbeitet. Anschliessend wird auf dem Kalander eine Folie von 0,4 mm Dicke hergestellt. Sie ist in einem reinen roten Farbton gefärbt. Die Färbung ist hitzebeständig, licht- und migrationsecht.

Beispiel 30: 0,2 g des nach Beispiel 1 hergestellten Pigments, 1 g Titandioxyd (Rutil) und 100 g LD-Polyäthylengranulat werden in einer Trommel gemischt und das Gemisch anschliessend auf dem Mischwalzwerk bei 130° verarbeitet. Die Masse wird heiss zu Platten verpresst oder in der Strangpresse verformt. Die Platten zeigen einen schönen roten Farbton von guter Lichtechtheit.

Beispiel 31: 0,1 des nach Beispiel 1 hergestellten Pigmentes, 0,5 g Titandioxyd (Rutil) und 100 g Polypropylengranulat werden in einer Trommel gemischt und das Gemisch anschliessend auf dem Mischwalzwerk bei 190° verarbeitet, bis eine homogen gefärbte Mischung vorliegt. Die Masse wird heiss zu Platten von 1 mm verpresst. Die Platten zeigen einen reinen roten Farbton von guter Lichtechtheit.

Beispiel 32: 100 g stabilisiertes Polyvinylchlorid werden mit 1 g eines durch Salzknetung von 0,5 g Pigment mit 0,5 g eines Kopolymerisates aus 85% Polyvinylchlorid und 15% Polyvinylacetat erhaltenen Präparates gemischt und 6 Minuten bei 190° gewalzt. Das Walzgut wird manuell bewegt, bis eine gute Pigmentverteilung erzielt wird. Die Masse wird nun unter Druck bei 190-200° in der Form wieder abgekühlt. Die auf diese Weise in einem reinen roten Farbton eingefärbten Platten zeichnen sich durch eine hohe Wetterechtheit aus.

In der gleichen Weise können aufgehellte wetterechte rote Färbungen von Hart-PVC erzeugt werden, wenn dem Ansatz bei gleichem oder reduziertem Buntpigmentanteil zusätzlich Titandioxyd zugefügt wird.

Beispiel 33: 10 g Titandioxyd und 2 g des nach Beispiel 1 hergestellten Pigments werden mit 88 g einer Mischung von 26,4 Kokosalkylharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° eingebrannt, dann erhält man eine Rotlackierung, die sich bei guter Farbstärke durch eine sehr gute Ueberlackier-, Licht- und Wetterechtheit auszeichnet.

Beispiel 34: 4 Teile des fein verteilten Pigments gemäss Beispiel 1 werden in 20 Teilen Lösungsmittel der folgenden Zusammensetzung eingerührt: 50 Teile Solvesso (Gemisch aromatischer Kohlenstoffe), 15 Teile Butylacetat, 5 Teile Exkin II (Verlaufmittel auf Ketoximbasis), 25 Teile Methyl-Isobutylketon, 5 Teile Silikonöl (1% in Solvesso 150).

Nachdem die vollständige Feinverteilung erreicht ist (je nach Art des Rührens in ca. 15-60 Minuten), werden die Bindmittel zugesetzt, nämlich 48,3 Teile Baycryl L 530 (Acrylharz) (51% in Xylol/Butanol 3:1) und 23,7 Teile Maprenal TTX (Melaminharz) (55% in Butanol).

Nach kurzem Homogenisieren wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen 30 Minuten, 130°). Die erhaltenen roten Lackierungen zeichnen sich durch sehr guten Verlauf, hohen Glanz und ausgezeichnete Feinverteilung des Pigmentes, sowie durch ausgezeichnete Wetterechtheiten aus.

Patentansprüche

1. Disazopigmente der Formel

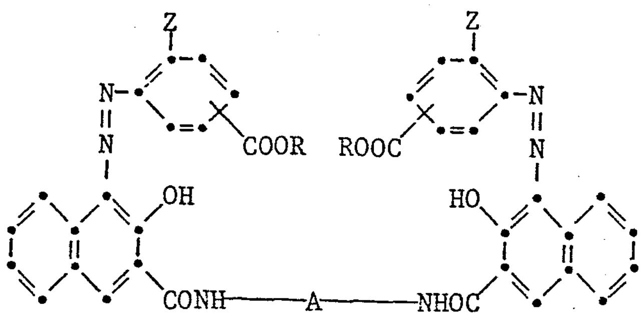

(I)

worin R einen fluorhaltigen $C_2$-$C_6$-Alkylrest, Z Wasserstoff, Chlor, $C_1$-$C_2$-Alkyl oder $C_1$-$C_2$-Alkoxy, A einen gegebenenfalls substituierten Phenylenrest oder einen Naphthylenrest bedeuten.

2. Disazopigmente gemäss Anspruch 1, worin R den Rest $-CH_2CF_3$ bedeutet.

3. Disazopigmente gemäss Ansprüchen 1 und 2, worin Z Methyl bedeutet.

4. Disazopigmente gemäss Ansprüchen 1-3, worin sich die COOR-Gruppen in p-Stellung zu Z befinden.

5. Disazopigmente gemäss Ansprüchen 1-4, worin A einen Rest der Formel

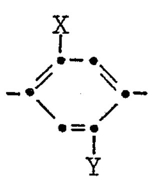

bedeutet, worin X und Y Wasserstoff, Chlor, Methyl oder $C_1$-$C_4$-Alkoxy bedeuten.

6. Disazopigmente gemäss Anspruch 5, worin X Chlor und Y Methyl bedeuten.

7. Verfahren zur Herstellung von Disazopigmenten gemäss Anspruch 1, dadurch gekennzeichnet, dass man ein Säurechlorid der Formel

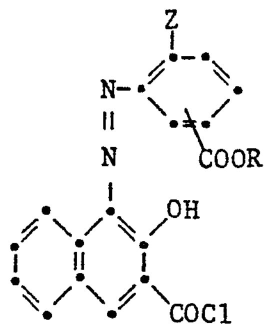

(II)

mit einem Diamin der Formel

$$H_2N\text{-}A\text{-}NH_2 \quad \text{(III)}$$

im Molverhältnis 2:1 kondensiert.

8. Verfahren gemäss Anspruch 7, dadurch gekennzeichnet, dass man von einem Säurechlorid der Formel (II) ausgeht, worin R den Rest $-CH_2CF_3$ bedeutet und die -COOR-Gruppe in p-Stellung zu Z steht.

9. Verfahren zum Färben von hochmolekularem organischen Material, gekennzeichnet durch die Verwendung der Pigmente gemäss Anspruch 1.

10. Hochmolekulares organisches Material enthaltend ein Pigment gemäss Anspruch 1.

Europäisches Patentamt

# EUROPÄISCHER RECHERCHENBERICHT

Nummer der Anmeldung

EP 83 81 0125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-1 189 230 (CIBA)<br>* Seite 1, ganz *<br>--- | 1,7,9, 10 | C 09 B 33/147<br>C 09 B 43/38 //<br>C 08 K 5/23 |
| A | FR-A-2 268 845 (CIBA-GEIGY)<br>* Seite 1,2, ganz *<br>--- | 1,7,9, 10 | |
| A | GB-A-1 221 728 (GEIGY)<br>* Seite 1, Formel II *<br>--- | 1,7,9, 10 | |
| A | US-A-4 051 121 (TCHERKINSKY, WASEM)<br>* Spalte 1, ganz *<br>----- | 1,7,9, 10 | |
| | | | RECHERCHIERTE SACHGEBIETE (Int. Cl. ³) |
| | | | C 09 B 33/00<br>C 09 B 43/00 |

Der vorliegende Recherchenbericht wurde für alle Patentansprüche erstellt.

| Recherchenort | Abschlußdatum der Recherche | Prüfer |
|---|---|---|
| DEN HAAG | 28-06-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82